(19) Europäisches Patentamt European Patent Office Office européen des brevets

(11) **EP 4 521 357 A1**

(12) **EUROPEAN PATENT APPLICATION**

(43) Date of publication:
12.03.2025 Bulletin 2025/11

(21) Application number: 23195986.7

(22) Date of filing: 07.09.2023

(51) International Patent Classification (IPC):
*G06V 10/44* (2022.01)    *G06V 10/82* (2022.01)

(52) Cooperative Patent Classification (CPC):
G06V 10/82; G06V 10/454

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VoxelSensors SRL**
**1000 Brussels (BE)**

(72) Inventors:
• **Royen, Remco**
**3080 Tervuren (BE)**
• **Munteanu, Adrian**
**3090 Overijse (BE)**
• **Van Der Tempel, Ward**
**3140 Keerbergen (BE)**

(54) **METHOD FOR POINT CLOUD ACQUISITION AND PROCESSING, AND SYSTEM THEREOF**

(57) The present invention relates to a method (100) and system (10) for point cloud acquisition and processing using a 3D sensor that acquires a continuous stream of 3D points is provided, the 3D points being spatially distributed over a whole scene. The method comprises the steps of acquiring a continuous stream of points using a resolution scalable 3D sensor, wherein the continuous stream of points is partitioned in real-time, each partition (2a-c) is employed as input to an encoder (3a-c) from the moment the partition (2a-c) becomes available. The continuous stream of points constantly increases resolution such that each subsequent partition provides an increased resolution compared to a previous partition. In a next step encoding of a point cloud of each partition (2a-c) to a feature vector (4a-c) is performed using a deep learning-based point cloud encoder (3a-c), preferably a transformer architecture. Finally there is a decoding the feature vector (4a-c) of each partition (2a-c) to an output prediction using a decoder (7a-c).

Fig. 1

**Description**

<u>Technical Field</u>

The present disclosure relates to a method for point cloud acquisition and processing, and especially to a method using a resolution scalable 3D sensor.

<u>Background</u>

3D scene understanding is of critical importance for many application domains, such as virtual reality, autonomous driving, and robotics, where timing is crucial. To this end, a fundamental component is 3D semantic segmentation.
Deep learning has shown great potential in different domains such as compression, 6D pose estimation and semantic segmentation. Presently known technologies focus on pure performance and how traditional methods can be improved. Less attention has been given to practical features. One such important feature is enabling the *joint acquisition and processing* with a sensor, more specifically a 3D sensor.
Most existing deep learning-based point cloud processing methods employ an architecture where the first layer processes the whole input data altogether [1][2][3][4][5]. Subsequently, the point cloud is subsampled and processed again. This is repeated multiple times and is similar to most CNN architectures [1]. By doing so, the input is processed at different resolutions and the receptive field is progressively increased. An important drawback of this approach is that it is time and computational consuming. Furthermore, this conventional processing paradigm requires the point cloud to be fully acquired at full resolution before its processing can start.
Modern state-of-the-art deep learning-based point cloud processing methods, such as PointTransformer [5], are transformer-based. Since they compute the K-nearest neighbors (KNN) and attention scores on the full resolution input, they are very time and power-consuming.
In addition, existing methods are not able to progressively process additional points in the input point cloud as they become available over time. The recent development of scalable 3D acquisition devices [6] enables the acquisition of point clouds of which the densities increase progressively over time. Such resolution-scalable 3D scanning devices generate a low spatial resolution of the scene with extremely small latency, and progressively increase the resolution of the acquired point cloud over time. However, existing techniques using such 3D scanning devices are power and computation consuming in order to fulfil performance requirements.
Consequently, there is a need for a processing method that provides an efficient 3D semantic segmentation which is time and computationally efficient.

[1] Krizhevsky, Alex, Ilya Sutskever, and Geoffrey E. Hinton. "Imagenet classification with deep convolutional neural networks." Communications of the ACM60.6 (2017): 84-90.
[2] He, Kaiming, et al. "Deep residual learning for image recognition." Proceedings of the IEEE conference on computer vision and pattern recognition. 2016.
[3] Ronneberger, Olaf, Philipp Fischer, and Thomas Brox. "U-net: Convolutional networks for biomedical image segmentation." Medical Image Computing and Computer-Assisted Intervention-MICCAI 2015: 18th International Conference, Munich, Germany, October 5-9, 2015, Proceedings, Part III 18. Springer International Publishing, 2015.
[4] Vaswani, Ashish, et al. "Attention is all you need." Advances in neural information processing systems 30 (2017).
[5] Zhao, Hengshuang, et al. "Point transformer." Proceedings of the IEEE/CVF international conference on computer vision. 2021.
[6] van der Tempel, Ward, et al. "Low power, low latency perception for XR." Optical Architectures for Displays and Sensing in Augmented, Virtual, and Mixed Reality (AR, VR, MR) IV. Vol. 12449. SPIE, 2023.

<u>Summary</u>

It is an object of the present invention to provide an improved solution that alleviates the mentioned drawbacks with present devices. Furthermore, it is an object to provide a method for 3D acquisition and processing of point cloud using a resolution scalable 3D sensor, which method provides a time and computational efficient semantic segmentation of a point cloud.
The invention is defined by the appended independent claims, with embodiments being set forth in the appended dependent claims, in the following description and in the drawings.
According to a first aspect of the invention a method for point cloud acquisition and processing using a 3D sensor that acquires a continuous stream of 3D points is provided, the 3D points being spatially distributed over a whole scene. The method comprises the steps of acquiring a continuous stream of points using a resolution scalable 3D sensor, wherein the continuous stream of points is partitioned in real-time, each partition is employed as input to an encoder from the moment the partition becomes available, wherein the continuous stream of points constantly increases resolution such that each subsequent partition provides an increased resolution compared to a previous partition; encoding a point cloud of each partition to a feature vector using a deep learning-based point cloud encoder; and decoding the feature vector of each partition to an output prediction using a decoder.

A resolution-scalable 3D scanning device may generate a low spatial resolution of the scene with extremely small latency, and progressively increase the resolution of the acquired point cloud over time, enabling increasing resolutions over time.

The partitioning of the acquired continuous stream may allow the different partitions to be handled differently and separately, thus increasing potential parallelization. An improvement in processing time may thereby be achieved, with comparable quality against known methods. Also, the first partition may be processed while other partitions are still being captured, also leading to a time gain. Each partition may be processed in an individual branch. By processing the partitions sequentially, the processing memory (CPU or GPU) may be reduced in comparison to processing the whole data stream at once. Less data may need to be handled at once. By using the present invention, a 30-60% faster process may be achieved compared to a baseline process when using the highest spatial resolution. This may be due to reduced complexity of the data processing and the continuous acquisition of point cloud data.

The continuous stream of points may be acquired in at least two, at least three or at least four or more partitions, with subsequently increasing resolution. Each partition may acquire points of the same scene by the 3D sensor, but with different resolution. By partitioning the continuous stream of points, it may be meant that partitions are sequentially formed with respective increasing resolution.

The method may be utilized with any point cloud semantic segmentation network that employs an encoder-decoder architecture. The encoder-decoder architecture may be a transformer-based architecture. One example of such architecture is PointTransformer. The encoder may process the input point cloud and transform it to a latent representation, which may be seen as high-level features, relevant for the task. The decoder may employ these high-level features to predict a segmentation class for each input point, providing an output prediction. Each encoder-decoder structure, or branch, may be trained in an end-to-end manner on a training dataset that consists of point clouds and their associated per-point ground-truth segmentation labels. The deep-learning based encodes-decoder architecture may be trained branch by branch. All weights from previous branches may be freezed while training for an extra partition and the loss-function may be computed only on the results from the current partition. Each branch may be trained using a predetermined number of epochs and with a predetermined batch size.

According to one embodiment, the partitions of the continuous stream may be sequentially increasing in size. In accordance with the employed 3D sensor, sequentially increased partition size may lead to higher resolution point cloud partitions, without overlapping points between different partitions. These partitions may be acquired sequentially in time.

As a consequence of the partitions of increasing size, the first partitions may be smaller (in terms of number of points) than the following partitions. Thus, the earlier partition(s) may be processed much faster and with very low latency, enabling extremely low latency and early decision making. The difference in resolution between different partitions may increase the variety of input data and thus, the performance of the processing. It may allow a more flexible resource-management where the smaller partitions may be processed by a fast, but small, computing resource, while the larger partitions may be processed by a bigger computing resource.

According to one embodiment, different encoder-decoder structures may be employed in parallel branches, each branch processing a different partition. For each processed partition, a separate encoder-decoder structure may be used. In other words, each partition may be processed in individual encoder and decoder, in an individual branch. This may allow progressive encoding where every partition may be processed separately, allowing greater parallelization of the processing, faster processing, more easily spread processing over multiple computing resources. By executing the branches sequentially, a heavily reduced power consumption may be achieved.

According to one embodiment, the encoder of each branch may be executed immediately when the partition from the continuous stream has been acquired. Thus, the encoders from the different branches may be executed in an asynchronous manner. The need for the waiting until the dense point cloud has been obtained may thereby be eliminated. As soon as a first, coarse, representation of the scene has been captured in the first partition, it may be processed. This may allow the joint point cloud acquisition and processing and the usage of the acquisition time to start processing, providing faster and time-efficient processing. It may further lead to more power-efficient solutions as not all encoders have to be launched at the same time, but spread over time.

According to one embodiment, the feature vector obtained by an encoder for a second partition with a second resolution may be fused with a feature vector from a first partition with a first resolution, the first resolution being lower than the second resolution, into a multi-resolution feature vector.

The feature vectors resulting from the encoding from different resolution point clouds, of different partitions in different branches, may be fused to one multi-resolution feature vector. This may provide a performance improvement without eliminating the advantages relating to e.g. time efficiency. The embodiment may be power and time-efficient since the fusion happens on the feature vector which is of reduced dimensionality compared to the input to the branch.

Each subsequent partition may have an increased resolution of the acquired point cloud in the continuous stream. The first partition in the embodiment may be the partition with the lowest resolution, or a subsequent partition with increased resolution. The feature vector of the first partition may be a feature vector output from the encoder of the first partition in the first branch, or a multi-resolution feature vector resulting from a previous fusion between two or more feature vectors.

According to one embodiment, a feature vector obtained by an encoder for a third partition with a third resolution, the third resolution being higher than the second resolution, may be fused with the multi-resolution feature vector from the second partition.

According to one embodiment, the feature vector of the third partition may be further fused with the feature vector of the first partition, wherein the feature vector of the first partition and the multi-resolution feature vector of the second partition may be combined using concatenation prior to fusing with the feature vector from the encoder of the third partition.

The third branch may be processing the third sequential resolution of the continuous stream, i.e. the third partition. For the third partition, and each subsequent partition with sequentially higher resolution, the feature vector obtained from the encoder of the third, or higher, branch may be fused with both the multi-resolution feature vector of the previous branch and the (multi-resolution) feature vector of the yet previous branch. In other words, feature vector of partition *n* may be fused with the multi-resolution feature vector of partition *n-1* and the (multi-resolution) feature vector of partition *n-2*. Prior to fusing the three feature vectors, the multi-resolution feature vector of partition *n-1* and the (multi-resolution) feature vector of partition *n-2* may be combined using concatenation. In one embodiment, the feature vector of partition *n* may be fused with all previous feature vectors of partitions *n-1, n-2, n-3, ...* 1. For all previous partitions for which a multi-resolution feature vector has been encoded, such multi-resolution feature vector may be used for the fusing with the feature vector of partition *n*. The *n*th partition may have a *n*th resolution being higher than the resolutions of each previous partition. In one embodiment, the *n*th feature vector may be fused with the feature vector of the first partition and each multi-resolution feature vector of all the remaining previous partitions.

According to one embodiment, the feature vectors may be fused based on a K-nearest neighbors, KNN, algorithm. Each feature of a partition may be fused with the features of the earlier partitions of the continuous stream of points, associated to the nearest K points. The nearest K points may be computed on the points associated to each feature of the feature vector which is of reduced dimensionality compared to the input partitions. The time impact may thus be limited. This may further provide performance improvement, and be power-efficient since it uses previously computed feature vectors from other partitions and as such reduce the required complexity of the encoder.

According to one embodiment, the input to the second or third decoder may be the fused second or third multi-resolution feature vector, respectively.

In each branch in which feature vectors have been fused to a multi-resolution feature vector, the decoder of such branch may receive a multi-resolution feature vector to decode to generate an output prediction. Thus, the decoders may decode multi-resolution feature vectors. Performance may thereby be improved as the decoders may receive a higher amount of information (fused from different resolutions) compared to the output feature vectors of the encoder without negative effect on time.

According to one embodiment, the decoder may be executed immediately when the fused multi-resolution feature vector is computed.

Thus, the decoders in the different branches may be executed in an asynchronous manner. This may eliminate the need for the waiting until the dense point cloud has been obtained and processed, which is typical for conventional processing paradigms. As soon as a first, coarse representation of the scene has been captured in the first partition and encoded to a feature vector, the fused feature vector of a second partition may be decoded. The obtained fused feature vector of the second partition may on his turn allow the fused feature vector of the third partition to be decoded. This may continue until the obtained fused feature vector of the (n-1)th partition on his turn allows the fused feature vector of the n-th partition to be decoded. It further may allow the joint point cloud acquisition and processing and the usage of the acquisition time to start processing, and provide faster and time-efficient processing. As not all decoders may have to be launched at the same time, but can spread over time, a more power-efficient solutions may be achieved.

According to one embodiment, the outputs of the decoders of the branches are obtained at different time-instances. This may improve the joint point cloud acquisition and deep learning-based encoder processing. The need for the waiting until the dense point cloud has been obtained may be eliminated, further enabling early-decision making as the first results are obtained extremely fast. Further, it gives flexibility in terms of the required confidence and computations of later partitions may be interrupted when required confidence is achieved. The first processing results may be obtained while the acquisition process is ongoing.

According to one embodiment, the output of a decoder of a branch may be refined by an updating step that transfers information from the outputs from later branches.

The output of each branch may thereby be improved using information from subsequent branches. An increase in performance may be achieved while removing the need to re-compute the output of the earlier branches as they may be updated by a quick and simple refinement step. Yet, such update may affect the power and time consumption in a low level.

In one embodiment, the update of the output prediction of a previous branch may be provided by replacing the previous prediction output with the outcome of a majority voting in the group of nearest neighbors in later predictions. In another embodiment, the update may be implemented by combining the prediction output of the previous branch with prediction outputs of one or more later branch. Hence, prediction outputs of a previous branch may be improved based on prediction outputs of later branches.

According to a second aspect of the invention, a computer program product is provided, configured to, when executed on a processing device, execute the method according any one of the embodiments herein.

According to a third aspect of the invention, a readable computer medium comprising the computer program product is provided.

The processing unit may comprise one or more computer units, data processing units, and/or general purpose processors configured to perform the steps of the method according to any of the embodiments herein. The processing unit may comprise a computer program product or software configured to, when executed, to perform the steps of the method. The processing unit may comprise, or be communicatively connected to, a computer readable storage medium comprising the computer program product or software.

According to a fourth aspect of the invention, there is provided a system for point cloud acquisition and processing comprising a resolution scalable 3D sensor configured to acquire a continuous stream of 3D points, the 3D points being spatially distributed over a whole scene, a partitioning unit configured to partition the continuous stream of points in real-time, each partition is employed as input to an encoder from the moment the partition becomes available, wherein the continuous stream of points constantly increases resolution such that each subsequent partition provides an increased resolution compared to a previous partition; a deep-learning based point cloud encoder for each partition, each encoder configured to encode a point cloud of the partition to a feature vector; and a decoder for each partition configured to decode the feature vector for the partition to an output prediction

The system may be configured to perform methods according to any one of the embodiments described above. The system may further comprise at least one fusion block configured to operate according any one of the embodiments describing a fusion block herein. The system may comprise a processing unit configured to operate according to one or more of the entities of the disclosed system.

Brief Description of the Drawings

The invention will in the following be described in more detail with reference to the enclosed drawings, wherein:

Fig. 1 shows a schematic block scheme of a process according to an embodiment of the present invention.
Fig. 2 shows a schematic block scheme of a fusion block according to an embodiment of the present invention.
Fig. 3 shows a performance results comparison chart of an embodiment of the present invention.
Fig. 4 shows a timing results comparison chart of an embodiment of the present invention.
Fig. 5 shows visual results of an embodiment of the present invention.
Fig. 6 shows a flow chart of a method according to an embodiment of the present invention.

Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

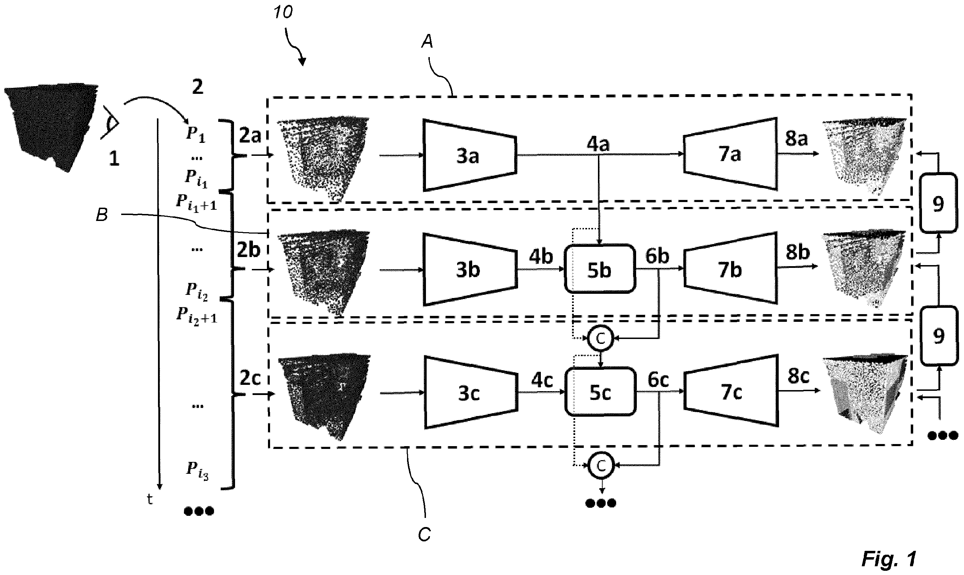

Fig. 1 illustrates a process pipeline of a system 10 implementing a method according to an embodiment of the invention.

A scene 1 is being captured by a resolution scalable 3D acquisition device. The resulting continuous stream of points is partitioned 2 in real-time into contiguous and non-overlapping point cloud partitions 2a-c of increasing size and thus increasing resolution. The point cloud partitions 2a-c are encoded in parallel branches A, B, C by deep learning-based point cloud encoders 3a-c. Each branch A-C comprises an encoder 3a-c. The encoders 3a-c are for example transformer-based. The encoders 3a-c for the different partitions 2a-c are executed in an asynchronous manner whereby an encoder 3a-c is executed immediately when the partition 2a-c is available. At the same time as an encoder of a partition is executed, the point cloud of a next partition is being acquired. The encoders 3a-c encode each input point cloud partition 2a-c in a feature vector 4a-c for that specific resolution.

The encoder-decoder architecture may be PointNet++-based [7, 11], Point convolution-based [8-10], or transformer-based [5, 12-13]. Therefore, the skilled person understands that other architectures may also be suitable.

[7] Qi, Charles Ruizhongtai, et al. "Pointnet++: Deep hierarchical feature learning on point sets in a metric space." Advances in neural information processing systems 30 (2017).

[8] Wang, Yue, et al. "Dynamic graph cnn for learning on point clouds." ACM Transactions on Graphics (tog) 38.5 (2019): 1-12.

[9] Thomas, Hugues, et al. "Kpconv: Flexible and deformable convolution for point clouds." Proceedings of the IEEE/CVF international conference on computer vision. 2019.

[10] Zhao, Hengshuang, et al. "Pointweb: Enhancing local neighborhood features for point cloud processing." Proceedings of the IEEE/CVF conference on computer vision and pattern recognition. 2019.

[11] Qian, Guocheng, et al. "Pointnext: Revisiting pointnet++ with improved training and scaling strategies." Advances in Neural Information Processing Systems 35 (2022): 23192-23204.

[12] Wu, Xiaoyang, et al. "Point transformer v2: Grouped vector attention and partition-based pooling." Advances in Neural Information Processing Systems 35 (2022): 33330-33342.

[13] Lai, Xin, et al. "Stratified transformer for 3d point cloud segmentation." Proceedings of the IEEE/CVF Conference on Computer Vision and Pattern Recognition. 2022.

A multi-resolution feature vector fusion block 5b-c is configured to fuse the obtained feature vector 4b-c for a specific partition with the feature vectors 4a-c from previous partitions. To do so, it may employ a K-nearest neighbors (KNN) technique where the features from nearby points are employed in the fusion process. Resulting multi-resolution feature vectors 6b-c contain information from different partitions and thus from different resolutions.

More specifically, in one embodiment a second branch B comprises a fusion block 5b which is configured to fuse the feature vector 4a from a first partition 2a with the feature vector 4b of the second partition 2b, resulting in multi-resolution feature vector 6b. Further, the third branch C may comprise a fusion block 5c which is configured to fuse the feature vector 4c of the third partition 2c with the multi-resolution feature vector 6b resulting from the fusing process in the second branch B. In one embodiment, the multi-resolution feature vector 6b is combined with the feature vector 4a of the first partition 2a using concatenation prior to fusing with the feature vector 4c of the third partition 2c. The process is repeated for any number n of resolution layers. In the $n$th branch, a fusion process may be performed between the feature vector of the $n$th branch and each encoded feature vector and/or multi-resolution feature vector of the previous branches $n-1, n-2, n-3, ...$ 1. The feature vector of the nth branch may be fused with the feature vector of the first branch and the multi-resolution feature vectors of each of the remaining previous branches.

Deep learning-based point cloud decoders 7a-c are employed to decode the feature vectors, either feature vector 4a or multi-resolution feature vectors 6b-c, and output a prediction outputs 8a-c of the partitions 2a-c in the branches A-C. The decoders 7a-c may use a transformer architecture, such as PointTransformer. The decoders 7a-c can be executed in an asynchronous manner whereby a decoder 7a-c is executed immediately when the feature vector 4a, 6b-c is available. The resulting prediction outputs 8 are obtained asynchronously. The prediction output 8a on e.g. a first partition 2a is obtained while the acquisition and processing of other partitions 2b-c is still ongoing. The process is similarly generalized for any number n of branches, each comprising a decoder decoding an output prediction based on the input partition and feature vectors of previous branches.

In one embodiment, a progressive update step 9 may be applied. The update process iterates back and improves the quality of previous prediction outputs 8a-c, given the later, higher quality predictions which fused more information.

In more detail, the partitions 2a-c may mathematically be denoted as $X_i \in \mathbb{R}^{N_i \times C}$ with $i \in [1,s]$ and $N_1 < \cdots < N_s < N,$ s being the number of partitions and N is the total number of points in a final dataset, being the sum of the points of all partitions. In the illustrated example, the first partition 2a comprises points $P_1 ... P_{i_1}$, the second partition samples points $P_{i_1+1} ... P_{i_2}$, and the third partition samples points $P_{i_2+1} ... P_{i_3}$. The partitioning is made sequentially along time $t$.

The first partition 2a, also denoted $X_1$ is processed by the first encoder 3a and decoder 7a, resulting in a prediction output 8a, mathematically denoted as $Y_1 \in \mathbb{R}^{N_1}$. Since the number of points $N_1 << N,$ N being the number of points in a final dataset, the computational complexity of the first partition, having the first lowest resolution, is low and a fast prediction may be obtained.

The second partition 2b, partitioned as $X_2$, is processed by separate encoder 3b to provide the feature vector 4b as $\alpha_2 \in \mathbb{R}^{N_2' \times F}$ where $N_2'$ is the number of (downsampled) points for which each F features are computed in feature vector 4b. In order to improve the performance, the features of the feature vector 4b are fused with features of feature vector 4a of previous partition 2a by the fusion module 5b. The resulting multi-resolution features $\alpha_2^f$ of multi-resolution feature vector 6b are employed by decoder 7b to obtain output prediction 8b, also denoted $Y_2$. Once all s number of partitions are processed, $Y = \{Y_1, Y_2, ..., Y_s\} \in \mathbb{R}^N$ is obtained.

In terms of computational complexity, the present invention provides an advantage compared to a method handling all sampled data at once. When using an attention mechanism that requires the computation of the K-Nearest Neighbors (KNN), the complexity of processing the sampled input as a whole may be expressed as

$$O(N^2) = O((N_1 + \cdots + N_s)^2 = O(N_1^2 + \cdots + N_s^2 + 2\sum_{k=1}^{s}\sum_{p=1,p\neq k}^{s} N_k N_p)$$

, where $N = N_1 + \cdots + N_s$, with s number of partitions with increasing resolution. In the present invention, an attention mechanism may be applied in parallel on the partitions 2a-c, providing a complexity of $O(N_1^2 + \cdots + N_s^2)$. Compared to a non-scalable approach, the present invention substantially lowers complexity with a factor proportional to $\sum_{k=1}^{s}\sum_{p=1,p\neq k}^{s} N_k N_p$.

With a larger number s of partitions, the effect of reduced complexity becomes more pronounced as the partition sizes become smaller. Further, a sequential processing of partitions also provides computational redundancy, though the KNN is the most computational expensive operation. For large N and a large amount of partitions, the effect of the double product elimination may become significant.

To further describe the fusion block, $\alpha_{i-1}^c \in \mathbb{R}^{N_j' \times F}$ may be the concatenated features from a lower resolution partition, where $N_j'$ is the number of concatenated points in feature space. Given $\alpha_{i-1}^c$ and $\alpha_i$, the fusion block may combine the multi-resolution information into a single feature vector that is used for decoding.

The deep-learning based encoder-decoder structure may be trained partition by partition. All weights from previous partitions may be freezed while training an extra partition and the loss-function may be computed only on the results from the current partition. This may allow the backbone architecture to achieve maximal results for each resolution.

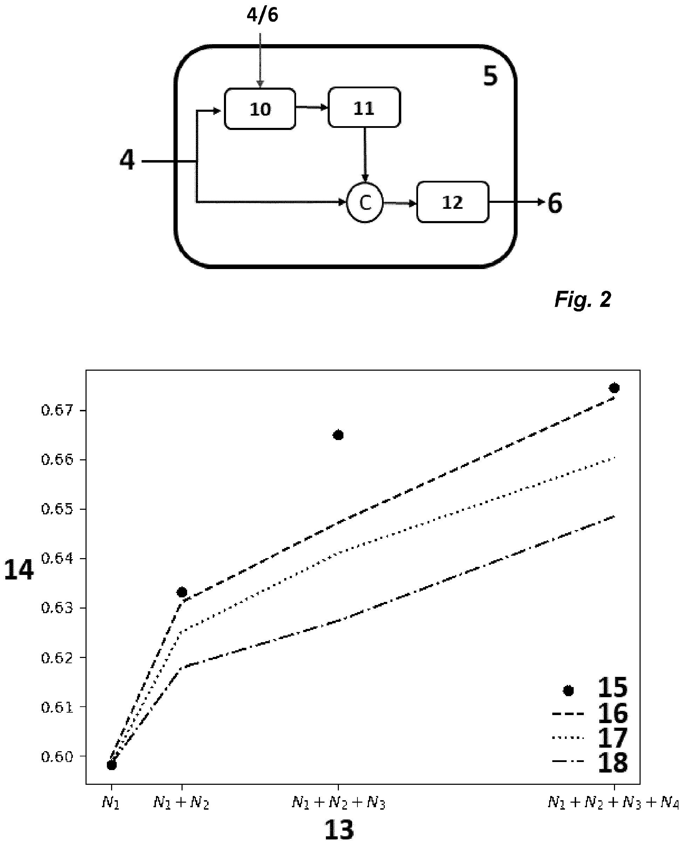

Fig. 2 illustrates a multi-resolution feature vector fusion block 5. In general, the fusion block 5 retrieves relevant features from previous partitions and fuses them with the features of the current partition. The fusion block 5 comprises a Query And Group (QAG) block 10 configured to retrieve feature vector 4 and/or multi-resolution feature vector 6 from previous partitions that are most relevant to the features of the current partition. More specifically, the QAG block may employ a KNN algorithm to retrieve the features from $\alpha_{i-1}^c$ belonging to the K- nearest points to the points associated to the features of $\alpha_i$. As these features are originating from different resolution partitions, the acquired feature vectors contain multi-resolution information.

The multi-resolution feature vector fusion block 5 further comprises a deep learning-based processing block 11 configured to encode these features of the K-nearest neighbors to a single feature vector. The processing block 11 may be configured to process the K-nearest neighbors by a Conv1D process, followed by a MaxPool layer.

The multi-resolution feature vector fusion block 5 is further configured to concatenate the features $\alpha_i$ of the current partition and the resulting feature vector from the processing block 11, processed to a single multi-resolution feature vector 6 for that partition that incorporates the multi-resolution information.

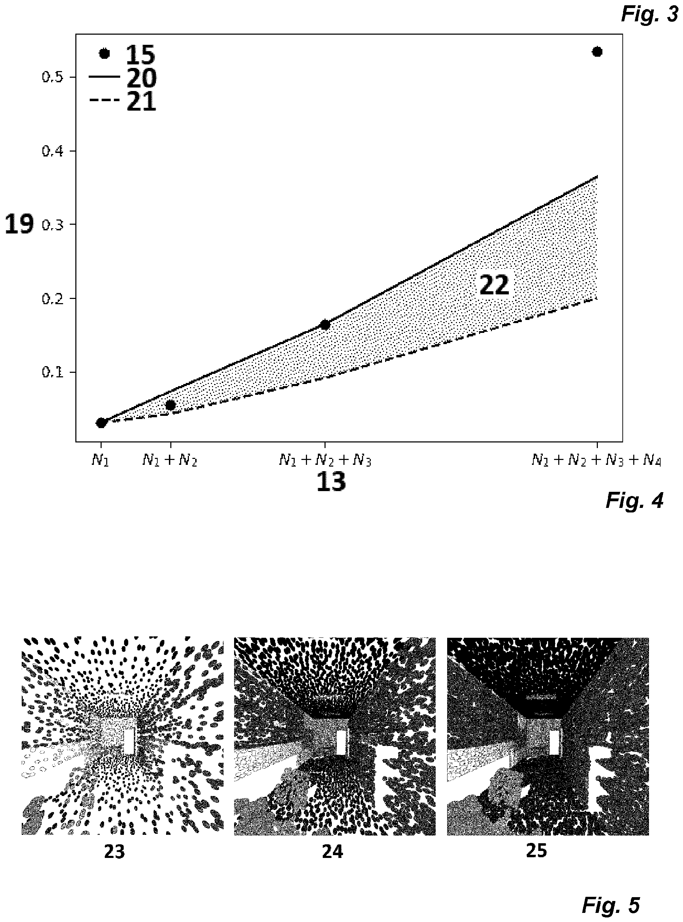

Fig 3 illustrates performance results of the disclosed method. On the x-axis 13, the number of points are displayed, where $N_i$ is the number of points included in the *i*-th partition. The performance of the investigated methods for semantic segmentation are compared in terms of mean Intersection over Union (mIoU) 14. As a baseline 15, the backbone semantic segmentation network has been used to process the points in a non-progressive manner. Thus, in contrast to the described method, the baseline approach handles the complete point cloud at every partition, necessitating the availability of all data prior to execution. It does not work on the different partitions, lacks the ability to process the data progressively and does not generate any intermediate results. The results of the described method is denoted 16. As the method works in a progressive method, the points are interconnected and dependent of each other. Notation 17 indicates the results of the method according to an embodiment without the update step 9. Notation 18 indicates results of the method according to an embodiment without the multi-resolution fusion 5 and the update step 9.

Fig 4 illustrates timing results during inference. On the y-axis the inference time 19 required is provided. Notation 20 indicates upper limit of the inference time. This is the case where the data acquisition is instantaneous and thus, all latency is created by the processing. Notation 21 indicates lower limit of the inference time. This is the case where the processing is faster than the acquisition of the different partitions. The region 22 is where all operations happen, bounded by the upper and lower limit. It may be noted that the present invention may achieve a 31% decrease in inference time at the highest partition with respect to the baseline even if operating on the upper bound. On the lower bound, the decrease may be 61%. The reduced inference time may be achieved mainly due to reduced complexity as discussed above.

Fig 5 illustrates visual results of the described method on a scene, including results 23 on one of the lowest partitions, results 24 on an intermediate partition, and results 25 on a later partition.

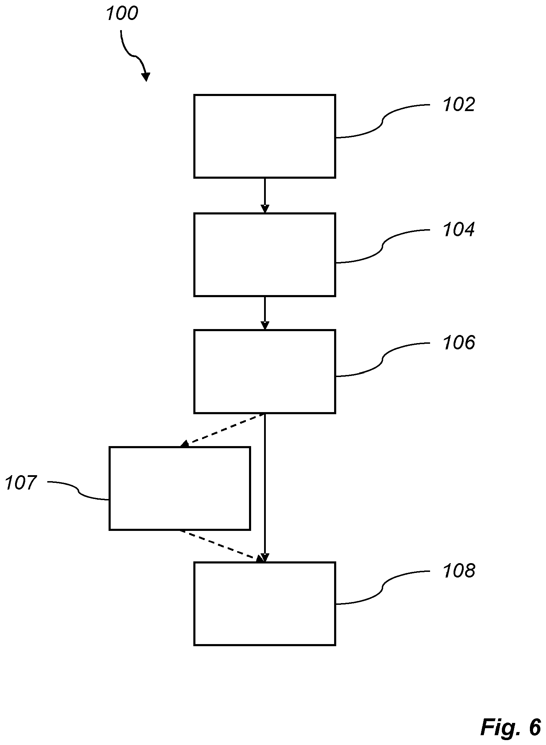

Fig 6 illustrates the method 100 according to an embodiment of the present invention. The method 100 comprises a step of acquiring 102 a continuous stream of 3D points of a scene. The continuous stream is acquired using a resolution-scalable 3D sensor. The continuous stream is partitioned 104 in real-time. Each partition is employed as input to an encoder 3. For each partition, the continuous stream is acquired with a sequentially increasing resolution. Each subsequent partition thereby provides an increased resolution compared to a previous partition. The method further comprises a step of encoding 106 a point cloud of each partition to a feature vector 4 using a deep learning-based point cloud encoder 3. Further, the method 100 comprises a step of decoding 108 the feature vector 4 of each partition to an output prediction 8.

In one embodiment, the method 100 may further comprise a step of fusing 107 the feature vector 4 of a second partition with the feature vector 4 of a first partition into a multi-resolution feature vector 6. The first partition may have a first resolution and the second partition may have a second resolution, the first resolution being lower than the second resolution.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Method for point cloud acquisition and processing using a 3D sensor that acquires a continuous stream of 3D points, the 3D points being spatially distributed over a whole scene, the method comprising the steps of:

   a) acquiring a continuous stream of points using a resolution scalable 3D sensor, wherein the continuous stream of points is partitioned in real-time, each partition (2a-c) is employed as input to an encoder (3a-c) from the moment the partition becomes available, wherein the continuous stream of points constantly increases resolution such that each subsequent partition (2a-c) provides an increased resolution compared to a previous partition;
   b) encoding a point cloud of each partition to a feature vector (4a-c) using a deep learning-based point cloud encoder (3);
   c) decoding the feature vector of each partition (2a-c) to an output prediction (8a-c) using a decoder (7a-c).

2. The method according to claim 1, wherein the partitions (2a-c) of the continuous stream are sequentially increasing in size.

3. The method according to claims 1 or 2, wherein different encoder-decoder structures are employed in parallel branches (A, B, C), each branch processing a different partition (2a-c).

4. The method according to claim 3, wherein the encoder (3a-c) of each branch (A, B, C) is executed immediately when the partition (2a-c) from the continuous stream has been acquired.

5. The method according to any one of claims 1-4, wherein the feature vector (4b) obtained by an encoder (3b) for a second partition (2b) with a second resolution is fused with a feature vector (4a) from a first partition (2a) with a first resolution, the first resolution being lower than the second resolution, into a multi-resolution feature vector (6b).

6. The method according to claim 5, wherein a feature vector obtained by an encoder for a nth partition with a nth resolution, the nth resolution being higher than previous resolutions, is fused with feature vectors and/or multi-resolution feature vectors of all previous partitions.

7. The method according to claim 6, wherein the feature vector (4c) from the third partition (2c) is further fused with the feature vector (4a) from the first partition (2a), wherein the feature vector (4a) from the first partition (2a) and the multi-resolution feature vector (6b) from the second partition (2b) are combined using concatenation prior to fusing with the feature vector (4c) from the encoder (3c) of the third partition (2c).

8. The method according to any one of claims 5-7, wherein the feature vectors are fused based on a K-nearest neighbors, KNN, algorithm.

9. The method according to any one of claims 5-8, wherein the input to the second or third decoder (7b-c) is the fused second or third multi-resolution feature vector (6b-c), respectively.

10. The method according to claim 9, wherein the decoder (7b-c) is executed immediately when the fused multi-resolution feature vector (6b-c) is computed.

11. The method according to any one of the preceding claims, wherein the outputs of the decoders (7a-c) of the partitions are obtained at different time-instances.

12. The method according to any one of the preceding claims, wherein the output (8a-c) of a decoder (7a-c) of a branch is refined by an updating step (9) that transfers information from the outputs (8b-c) from later partitions.

13. A computer program product configured to, when executed on a processing device, execute the method according any one of the preceding claims.

14. A readable computer medium comprising the computer program product according to claim 12.

15. A system (10) for point cloud acquisition and processing comprising:

a resolution scalable 3D sensor configured to acquire a continuous stream of 3D points, the 3D points being spatially distributed over a whole scene,
a partitioning unit configured to partition the continuous stream of points in real-time, each partition (2a-c) is employed as input to an encoder (3a-c) from the moment the partition becomes available, wherein the continuous stream of points constantly increases resolution such that each subsequent partition (2a-c) provides an increased resolution compared to a previous partition;
a deep-learning based point cloud encoder (3a-c) for each partition (2a-c), each encoder configured to encode a point cloud of the partition to a feature vector (4a-c); and
a decoder (7a-c) for each partition (2a-c) configured to decode the feature vector (4a-c) for the partition (2a-c) to an output prediction (8a-c).

Fig. 1

*Fig. 2*

Fig. 3

**19**

**13**

Fig. 4

**23**          **24**          **25**

Fig. 5

*Fig. 6*

**Europäisches Patentamt**
**European Patent Office**
**Office européen des brevets**

# EUROPEAN SEARCH REPORT

Application Number

EP 23 19 5986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANGCHENG LIU ET AL: "FG-Net: Fast Large-Scale LiDAR Point CloudsUnderstanding Network Leveraging CorrelatedFeature Mining and Geometric-Aware Modelling", ARXIV.ORG, CORNELL UNIVERSITY LIBRARY, 201 OLIN LIBRARY CORNELL UNIVERSITY ITHACA, NY 14853, 17 December 2020 (2020-12-17), XP081840309, * page 1, paragraph abstract – page 12, paragraph section V; figures 1-16; tables 1-4 * | 1-15 | INV. G06V10/44 G06V10/82 |

TECHNICAL FIELDS SEARCHED (IPC)

G06V

The present search report has been drawn up for all claims

| Place of search | Date of completion of the search | Examiner |
|---|---|---|
| The Hague | 8 December 2023 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KRIZHEVSKY** ; **ALEX** ; **ILYA SUTSKEVER** ; **GEOFFREY E. HINTON.** Imagenet classification with deep convolutional neural networks. *Communications of the ACM*, 2017, vol. 60 (6), 84-90
- **HE, KAIMING et al.** Deep residual learning for image recognition. *Proceedings of the IEEE conference on computer vision and pattern recognition*, 2016
- U-net: Convolutional networks for biomedical image segmentation. **RONNEBERGER** ; **OLAF** ; **PHILIPP FISCHER** ; **THOMAS BROX**. Medical Image Computing and Computer-Assisted Intervention-MICCAI 2015: 18th International Conference. Springer International Publishing, 05 October 2015, vol. 18
- **VASWANI** ; **ASHISH et al.** Attention is all you need. *Advances in neural information processing systems*, 2017, vol. 30
- **ZHAO** ; **HENGSHUANG et al.** Point transformer.. *Proceedings of the IEEE/CVF international conference on computer vision.*, 2021
- Low power, low latency perception for XR.. **VAN DER TEMPEL, WARD et al.** Optical Architectures for Displays and Sensing in Augmented, Virtual, and Mixed Reality (AR, VR, MR) IV. SPIE, 2023, vol. 12449
- **QI, CHARLES RUIZHONGTAI et al.** Pointnet++: Deep hierarchical feature learning on point sets in a metric space. *Advances in neural information processing systems*, 2017, vol. 30
- **WANG, YUE et al.** Dynamic graph cnn for learning on point clouds. *ACM Transactions on Graphics*, 2019, vol. 38 (5), 1-12
- **THOMAS, HUGUES et al.** Kpconv: Flexible and deformable convolution for point clouds. *Proceedings of the IEEE/CVF international conference on computer vision.*, 2019
- **ZHAO, HENGSHUANG et al.** Pointweb: Enhancing local neighborhood features for point cloud processing. *Proceedings of the IEEE/CVF conference on computer vision and pattern recognition.*, 2019
- **QIAN, GUOCHENG et al.** Pointnext: Revisiting pointnet++ with improved training and scaling strategies.. *Advances in Neural Information Processing Systems*, 2022, vol. 35, 23192-23204
- **WU, XIAOYANG et al.** Point transformer v2: Grouped vector attention and partition-based pooling.. *Advances in Neural Information Processing Systems*, 2022, vol. 35, 33330-33342
- **LAI, XIN et al.** Stratified transformer for 3d point cloud segmentation.. *Proceedings of the IEEE/CVF Conference on Computer Vision and Pattern Recognition.*, 2022